# EUROPÄISCHE PATENTANMELDUNG

(11) **EP 3 441 946 A1**
(43) Veröffentlichungstag der Anmeldung: **13.02.2019**
(21) Anmeldenummer: 18181816.2
(22) Anmeldetag: 05.07.2018
(51) Int. Cl.: G07B 15/02, H04W 4/02, G06Q 50/30

(54) **VORRICHTUNG UND VERFAHREN ZUR AUTOMATISCHEN ANWESENHEITSKONTROLLE IN EINER FAHRGASTZELLE**

(30) Priorität: 08.08.2017 DE 102017213766
(71) Anmelder: Siemens Aktiengesellschaft, 80333 München (DE)
(72) Erfinder: Schiefer, Martin, 3100 St. Pölten (AT); Jahn, Martin, 3874 Litschau (AT)
(74) Vertreter: Maier, Daniel Oliver

(57) **Zusammenfassung**

Die Erfindung bezieht sich auf eine Vorrichtung und ein Verfahren zur automatischen Anwesenheitskontrolle in einer Fahrgastzelle (1) mit zumindest einem ersten Nutzermedium (2), das eine erste Sende- und Empfangseinheit (5) aufweist, und zumindest einem Erfassungsmodul (7) mit einer zweiten Sende- und Empfangseinheit (6).
Um vorteilhafte Konstruktionsbedingungen zu schaffen, wird vorgeschlagen, dass auf dem zumindest ersten Nutzermedium (2) zumindest ein erster Sensor (8) und ein zweiter Sensor (9) angeordnet sind, welche unterschiedliche Wirkprinzipien aufweisen und redundant zueinander ausgeführt sind.

Dadurch wird eine Anwesenheit zumindest des ersten Nutzermediums (2) in der Fahrgastzelle (1) mit großer Sicherheit erkannt.

## Beschreibung

Die Erfindung betrifft eine Vorrichtung und ein Verfahren zur automatischen Anwesenheitskontrolle in einer Fahrgastzelle mit zumindest einem ersten Nutzermedium, das eine erste Sende- und Empfangseinheit aufweist, und zumindest einem Erfassungsmodul mit einer zweiten Sende- und Empfangseinheit.

Eine genaue Anwesenheitskontrolle von Nutzermedien, welche beispielsweise von Fahrgästen öffentlicher Verkehrsbetriebe mit sich geführt werden, in Fahrgastzellen von Verkehrsmitteln (z.B. von Eisenbahnwagen, U-Bahnen Straßenbahnen, Bussen, Seil- oder Hängebahnen oder autonomen Fahrzeugen etc.) ist von großer Wichtigkeit. Insbesondere werden automatische Anwesenheitskontrollen bei Verkehrsbetrieben, welche elektronische Fahrkarten (E-Tickets) nutzen, zur Durchführung eines elektronischen Fahrgeldmanagements (EFM) bzw. zur Fahrkartenabrechnung angewendet, beispielsweise mittels einer Be-In-Be-Out (BiBo) - Kontrolle. Bei der BiBo-Kontrolle werden Fahrtstrecken von Passagieren automatisch erfasst, ohne, dass aktive Handlungen von Fahrgästen bei einem Betreten oder Verlassen der Fahrgastzelle (z.B. einem Fahrgastraum einer Straßenbahn) vorgenommen werden müssen.
Die Fahrgäste müssen Nutzermedien, z.B. Radio-Frequency Identification (RFID) - Chipkarten mit individuellen Signaturen mit sich führen. Anhand der Signaturen können Fahrtstrecken den jeweiligen Fahrgästen zugeordnet werden. Zur Feststellung der Fahrtstrecke eines Fahrgasts muss geprüft werden, ob sich dieser in der Fahrgastzelle aufhält. Dies ist oft mit technischen Schwierigkeiten bzw. einer unzureichenden Genauigkeit verbunden.

Häufig weist das Nutzermedium einen Weckempfänger auf, welcher beim Betreten der Fahrgastzelle durch den Fahrgast, der das Nutzermedium mit sich führt, mittels Bestrahlung durch elektromagnetische Wellen bestimmter Frequenzen (z.B. 110 Hz bis 150 Hz oder 6,78 MHz), sogenannte Wecksignale, aktiviert wird.
Dazu sind aufgrund kurzer Reichweiten der Wecksignale an Zugangstüren der Fahrgastzelle entsprechende Spulen oder Antennen vorgesehen.
Durch eine Aktivierung des Weckempfängers wird eine Schaltung des Nutzermediums aktiviert und eine Funkverbindung des Nutzermediums mit einem Erfassungsmodul der Fahrgastzelle erzeugt. Die Funkverbindung nutzt andere Frequenzen als jene der Wecksignale, beispielsweise 868 MHz oder 2,4 GHz. Das Erfassungsmodul erfasst die in der Fahrgastzelle anwesenden Nutzermedien und leitet entsprechende Identifikationsdaten an eine Recheneinheit des Erfassungsmoduls weiter. Zumindest einmalig zwischen zwei Haltestellen, an welchen das Verkehrsmittel anhält und ein Fahrgastwechsel erfolgt, erfolgt eine Signalübertragung zwischen den Nutzermedien und dem Erfassungsmodul.

In der DE 10 2012 009 610 A1 ist ein Verfahren sowie eine Vorrichtung zur Erfassung und Abrechnung von Fahrpreisen in einem Fahrzeug offenbart. Eine Anwesenheitskontrolle von Fahrgästen in einer Fahrgastzelle sowie die Abrechnung von Fahrpreisen werden mittels Nutzermedien, welche von den Fahrgästen mitgeführt werden, sowie einem Erfassungssystem des Fahrzeugs durchgeführt. Dabei werden erfasste Beschleunigungsprofile des Fahrzeugs mit von den Nutzermedien erfassten Beschleunigungen verglichen.

Weiterhin zeigt die EP 2 945 127 A1 ein Verfahren und eine Vorrichtung zur Fahrpreisabrechnung in einem Verkehrsmittel, bei dem elektronische Tickets erfasst werden. Dabei werden von auf den Tickets angeordneten Beschleunigungssensoren gemessene Beschleunigungen mit von einem in einer Erfassungseinheit des Verkehrsmittels vorgesehenen Beschleunigungssensor gemessenen Beschleunigungen verglichen.

Der Erfindung liegt die Aufgabe zugrunde, eine gegenüber dem Stand der Technik weiterentwickelte Vorrichtung anzugeben.

Erfindungsgemäß wird diese Aufgabe gelöst mit einer Vorrichtung der eingangs genannten Art, bei der auf dem zumindest ersten Nutzermedium zumindest ein erster Sensor und ein zweiter Sensor angeordnet sind, welche unterschiedliche Wirkprinzipien aufweisen und redundant zueinander ausgeführt sind.
Dadurch wird eine besonders genaue Anwesenheitskontrolle von Fahrgästen in der Fahrgastzelle erzielt. Aufgrund des ersten Sensors und des zweitens Sensors auf dem ersten Nutzermedium und deren unterschiedlicher Wirkprinzipien werden eine hohe Mess- und Ausfallsicherheit sowie folglich eine hohe Verfügbarkeit der Vorrichtung erzielt. Messwerte des ersten Sensors können mittels Messwerten des zweiten Sensors überprüft werden. Bei Ausfällen beispielsweise des ersten Sensors kann dessen Funktion durch den zweiten Sensor kompensiert werden, d.h. die Anwesenheitskontrolle kann zumindest zeitweilig allein von dem zweiten Sensor durchgeführt werden.
Weiterhin sind aufgrund des ersten Sensors und des zweiten Sensors keine Spulen und Antennen an Türen der Fahrgastzelle zur Übertragung von Wecksignalen kurzer Reichweite und geringer Frequenz erforderlich, wodurch sich die Fahrgastzelle im Hinblick auf ihre konstruktiven Eigenschaften vereinfacht und Installationsaufwendungen reduziert sowie Kosteneinsparungen erzielt werden.
Es ist zur Datenübertragung mit dem ersten Nutzermedium lediglich das Erfassungsmodul mit der zweiten Sende- und Empfangseinheit in der Fahrgastzelle vorzusehen. Die Datenübertragung kann mit elektromagnetischen Wellen einer bestimmten Frequenz erfolgen. Es ist keine zusätzliche, von dieser Frequenz unterschiedliche Frequenz für die Wecksignale erforderlich.
Trotz eines Fehlens von Spulen und Antennen an Türen der Fahrgastzelle sowie von diesen Antennen übertragenen Wecksignalen kann mit großer Genauigkeit festgestellt werden, ob das erste Nutzermedium in der Fahrgastzelle anwesend ist oder nicht.
Beispielsweise kann der erste Sensor als Beschleunigungssensor ausgeführt sein und eine Beschleunigung messen.
Beispielsweise kann der zweite Sensor als Magnetfeldsensor ausgeführt sein und eine magnetische Flussdichte messen, die zusammen mit einem Messwert des ersten Sensors sowie einer das erste Nutzermedium identifizierenden Information als entsprechendes Signal von der ersten Sende- und Empfangseinheit des ersten Nutzermediums an die zweite Sende- und Empfangseinheit des Erfassungsmoduls der Fahrgastzelle übertragen wird. Das Signal bzw. die magnetische Flussdichte und der Messwert des ersten Sensors werden in dem Erfassungsmodul ausgewertet. Überschreitet die magnetische Flussdichte einen festgelegten, auf magnetische Eigenschaften der Fahrgastzelle bezogenen Schwellwert und erfüllen auch Auswerteergebnisse bezüglich des Messwerts des ersten Sensors definierte Kriterien, so wird festgestellt, dass das erste Nutzermedium in der Fahrgastzelle anwesend ist.

Eine vorteilhafte Lösung wird erzielt, wenn der zweite Sensor als Schalldrucksensor ausgebildet ist.
Durch diese Maßnahme kann eine Anwesenheitsfeststellung des ersten Nutzermediums in der Fahrgastzelle auf Grundlage von bestimmten Schallemissionen (z.B. Durchsagen eines Audiosystems in der Fahrgastzelle) erfolgen.

Es ist günstig, wenn das zumindest erste Nutzermedium als Mobiltelefon ausgebildet ist.
Durch diese Maßnahme kann auf Fahrkarten verzichtet werden.

Eine vorteilhafte Ausgestaltung erhält man, wenn aus Messwerten zumindest des ersten Sensors und eines vierten Sensors eines zweiten Nutzermediums Differenzen gebildet werden,
wenn Absolutbeträge der Differenzen gebildet werden, und wenn eine Anwesenheit zumindest des ersten Nutzermediums und des zweiten Nutzermediums in der Fahrgastzelle dann festgestellt wird, wenn die Absolutbeträge eine festgelegte Toleranz nicht überschreiten und wenn Messwerte zumindest des zweiten Sensors einen festgelegten Schwellwert überschreiten. Durch diese Maßnahme kann auf aufwendige Ortungsverfahren bezüglich des ersten Nutzermediums und des zweiten Nutzermediums in der Fahrgastzelle verzichtet werden. Es sind lediglich einfache Auswertungen und Vergleiche von Sensormesswerten mit Schwellwerten und bzw. oder untereinander erforderlich.

Nachfolgend wird die Erfindung anhand von Ausführungsbeispielen näher erläutert.

Es zeigen beispielhaft:
- Fig. 1:: Eine schematische Darstellung eines ersten Nutzermediums einer beispielhaften Ausführungsvariante einer erfindungsgemäßen Vorrichtung, und
- Fig. 2:: Eine schematische Darstellung einer Fahrgastzelle mit einer beispielhaften Ausführungsvariante einer erfindungsgemäßen Vorrichtung.

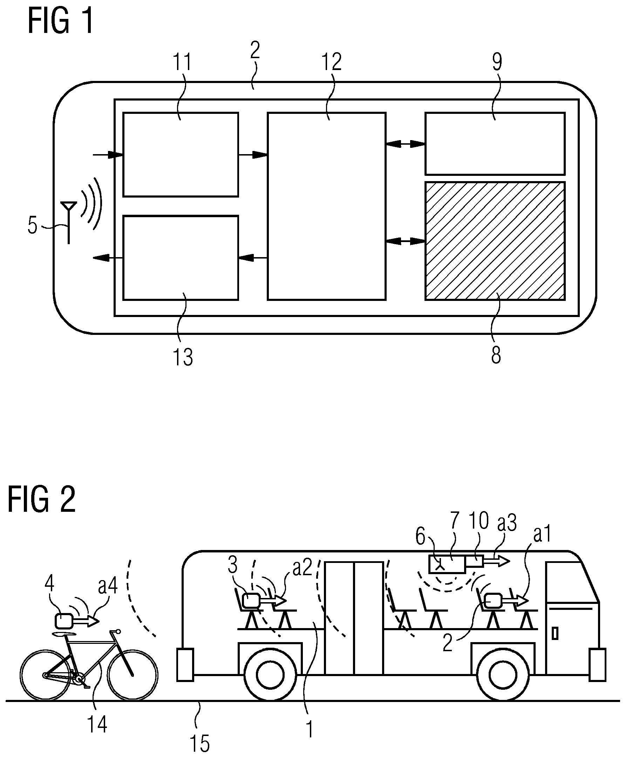

Fig. 1 zeigt eine schematische Darstellung bzw. ein Blockschaltbild eines als RFID-Chipkarte ausgeführten ersten Nutzermediums 2. Darauf angeordnet und mittels einer nicht im Detail gezeigten elektronischen Schaltung verbunden sind eine erste Sende- und Empfangseinheit 5, ein Empfänger 11, ein Mikrocontroller 12, ein erster Sensor 8, ein zweiter Sensor 9 sowie ein Sender 13.
Die erste Sende- und Empfangseinheit 5, der Empfänger 11, der Mikrocontroller 12 sowie der Sender 13 sind aus dem Stand der Technik bekannt.
Die erste Sende- und Empfangseinheit 5 ist für Sende- und Empfangsvorgänge von Hochfrequenzsignalen ausgeführt und sendet und empfängt elektromagnetische Wellen bzw. Signale einer Frequenz von 2,4 GHz. Mittels der Wellen wird die elektronische Schaltung bzw. werden Komponenten darauf wie z.B. der Mikrocontroller 12 und der erste Sensor 8 und der zweite Sensor 9 aktiviert und mit elektrischer Energie versorgt.
Die Signale, in die beispielsweise Informationen bezüglich eines abzubuchenden Fahrpreises für eine Benutzung eines Verkehrsmittels codiert sind, werden über den Empfänger 11 in den Mikrocontroller 12 geleitet und dort verarbeitet. Beispielsweise kann eine in dem Mikrocontroller 12, der eine Speichereinheit aufweist, gespeicherte Information über ein Fahrpreisguthaben um einen aktuell über das Signal erfassten und zu entrichtenden Fahrpreis reduziert werden.
Es ist jedoch auch möglich, dass keine spezifischen Informationen in das Signal codiert sind und eine Fahrpreisabbuchung mit vordefiniertem Abbuchungsbetrag durch einen Signalempfang ohne Auswertung von Signalinhalten ausgelöst wird.
Mit dem Mikrocontroller 12 sind der erste Sensor 8 und der zweite Sensor 9 verbunden. Der erste Sensor 8 ist als aus dem Stand der Technik bekannter Beschleunigungssensor, der als Mikro-Elektro-Mechanisches System (MEMS) ausgeführt ist, ausgebildet. Der zweite Sensor 9 ist als ebenfalls aus dem Stand der Technik bekannter Hall-Magnetfeldsensor ausgeführt, weist also ein in Vergleich mit dem ersten Sensor 8 unterschiedliches Wirkprinzip auf.
Mittels des ersten Sensors 8 werden Beschleunigungen des ersten Nutzermediums 2 gemessen, mittels des zweiten Sensors 9 magnetische Flussdichten in einer Umgebung des ersten Nutzermediums 2.
Informationen über Messergebnisse des ersten Sensors 8 und des zweiten Sensors 9 werden an den Mikrocontroller 12 geleitet und darin gespeichert, verschlüsselt und zusammen mit auf dem Mikrocontroller 12 gespeicherten Informationen zur Identifikation des ersten Nutzermediums 2, die ebenfalls verschlüsselt werden, an den Sender 13 weitergeleitet. In dem Sender 13 werden diese Informationen in Signale umgewandelt bzw. entsprechend codiert. Die Signale mit den darin codierten Informationen werden mittels der ersten Sende- und Empfangseinheit 5 an ein in Fig. 2 dargestelltes Erfassungsmodul 7 einer ebenfalls in Fig. 2 offenbarten Fahrgastzelle 1 des Verkehrsmittels übertragen.
Die übertragenen Signale werden ausgewertet und anhand von Auswerteergebnissen wird festgestellt, ob das erste Nutzermedium 2 in der Fahrgastzelle 1 anwesend ist, d.h. eine automatische Anwesenheitskontrolle durchgeführt. Wird eine Anwesenheit des ersten Nutzermediums 2 in der Fahrgastzelle 1 festgestellt, so erfolgt eine Fahrpreisabbuchung von dem ersten Nutzermedium 2.

In Fig. 2 ist eine Fahrgastzelle 1 eines Autobusses in schematischer Darstellung offenbart, in der ein nicht gezeigter erster Fahrgast mit einem ersten Nutzermedium 2 sowie ein ebenfalls nicht gezeigter zweiter Fahrgast mit einem zweiten Nutzermedium 3 anwesend sind. Erfindungsgemäß können selbstverständlich weitere Fahrgäste mit weiteren Nutzermedien in der Fahrgastzelle 1 anwesend sein.
Das erste Nutzermedium 2 und das zweite Nutzermedium 3 sind als im Zusammenhang mit Fig. 1 beschriebene RFID-Chipkarten ausgeführt.

Das erste Nutzermedium 2 weist, wie in Fig. 1 gezeigt, eine erste Sende- und Empfangseinheit 5, einen ersten Sensor 8 und einen zweiten Sensor 9 auf. Das zweite Nutzermedium 3 umfasst, nicht dargestellt, eine dritte Sende- und Empfangseinheit, einen vierten Sensor sowie einen sechsten Sensor. Der erste Sensor 8 und der vierte Sensor sind als aus dem Stand der Technik bekannte MEMS-Beschleunigungssensoren ausgeführt, der zweite Sensor 9 und der sechste Sensor als, ebenfalls bekannt, Hall-Magnetfeldsensoren.
Die Fahrgastzelle 1 weist ein Erfassungsmodul 7 mit einer zweiten Sende- und Empfangseinheit 6, welche für Sende- und Empfangsvorgänge von Hochfrequenzsignalen einer Frequenz von 2,4 GHz ausgeführt ist, mit einem dritten Sensor 10, der als bekannter MEMS-Beschleunigungssensor ausgebildet ist, und mit einer nicht dargestellten Recheneinheit auf.
Der als Beschleunigungssensor ausgeführte dritte Sensor 10 weist also gleiches Wirkprinzip wie der erste Sensor 8 auf. Erfindungsgemäß ist es jedoch auch denkbar, dass der dritte Sensor 10 das gleiche Wirkprinzip wie der zweite Sensor 9 aufweist, d.h. als Magnetfeldsensor ausgebildet ist.
Die zweite Sende- und Empfangseinheit 6 und der dritte Sensor 10 sind über nicht dargestellte Leitungswege mit der Recheneinheit verbunden.

Außerhalb der Fahrgastzelle 1 fährt ein nicht dargestellter Fahrradfahrer, der ein als RFID-Chipkarte ausgeführtes drittes Nutzermedium 4 mit sich führt, auf einem Fahrrad 14. Das dritte Nutzermedium 4 umfasst, nicht gezeigt, eine vierte Sende- und Empfangseinheit, einen als bekannten MEMS-Beschleunigungssensor ausgeführten siebenten Sensor und einen achten Sensor, der, ebenfalls bekannt, als Hall-Magnetfeldsensor ausgebildet ist.
Erfindungsgemäß ist es auch vorstellbar, dass sich weitere Nutzermedien außerhalb der Fahrgastzelle 1 befinden.

Der Autobus und das Fahrrad 14 fahren auf einer Fahrbahn 15 unmittelbar hintereinander.

Der erste Sensor 8 misst eine erste Beschleunigung a1 des ersten Nutzermediums 2, der vierte Sensor eine zweite Beschleunigung a2 des zweiten Nutzermediums 3, der dritte Sensor 10 eine dritte Beschleunigung a3 des Autobusses und der siebente Sensor eine vierte Beschleunigung a4 des dritten Nutzermediums 4.
Der zweite Sensor 9 misst eine erste magnetische Flussdichte in einer Umgebung des ersten Nutzermediums 2, der sechste Sensor des zweiten Nutzermediums 3 eine zweite magnetische Flussdichte in einer Umgebung des zweiten Nutzermediums 3 und der achte Sensor des dritten Nutzermediums 4 eine dritte magnetische Flussdichte in einer Umgebung des dritten Nutzermediums 4.
Innerhalb einer bestimmten Reichweite des Erfassungsmoduls 7 erfolgt laufend eine Signalübertragung zwischen der zweiten Sende- und Empfangseinheit 6 einerseits und der ersten Sende- und Empfangseinheit 5, der dritten Sende- und Empfangseinheit sowie der vierten Sende- und Empfangseinheit andererseits.

Aufgrund dieser Signalübertragung werden, wie in Zusammenhang mit Fig. 1 beschrieben, elektronische Schaltungen des ersten Nutzermediums 2, des zweiten Nutzermediums 3 und des dritten Nutzermediums 4 aktiviert und mit elektrischer Energie versorgt.

Von dem ersten Nutzermedium 2 werden Informationen zur Identifikation des ersten Nutzermediums 2, d.h. eine erste elektronische Signatur sowie Informationen bezüglich der gemessenen ersten Beschleunigung a1 und der ersten magnetischen Flussdichte laufend an das Erfassungsmodul 7 übertragen.
Von dem zweiten Nutzermedium 3 werden Informationen zur Identifikation des zweiten Nutzermediums 3, d.h. eine zweite elektronische Signatur sowie Informationen bezüglich der gemessenen zweiten Beschleunigung a2 und der zweiten magnetischen Flussdichte laufend an das Erfassungsmodul 7 übertragen.

Von dem dritten Nutzermedium 4 werden Informationen zur Identifikation des dritten Nutzermediums 4, d.h. eine dritte elektronische Signatur sowie Informationen bezüglich der gemessenen vierten Beschleunigung a4 und der dritten magnetischen Flussdichte laufend an das Erfassungsmodul 7 übertragen.

In der Recheneinheit des Erfassungsmoduls 7 werden die erste Beschleunigung a1, die zweite Beschleunigung a2, die dritte Beschleunigung a3 und die vierte Beschleunigung a4 sowie die erste magnetische Flussdichte, die zweite magnetische Flussdichte und die dritte magnetische Flussdichte laufend, in definierten Zeitintervallen gespeichert und ausgewertet. Dabei werden paarweise Differenzen auf Grundlage der ersten Beschleunigung a1, der zweiten Beschleunigung a2, der dritten Beschleunigung a3 und der vierten Beschleunigung a4 (beispielsweise werden eine erste Differenz zwischen der ersten Beschleunigung a1 und der zweiten Beschleunigung a2, eine zweite Differenz zwischen der ersten Beschleunigung a1 und der dritten Beschleunigung a3 sowie eine dritte Differenz zwischen der ersten Beschleunigung a1 und der vierten Beschleunigung a4 etc. gebildet) sowie Absolutbeträge von diesen Differenzen gebildet.
Weiterhin werden in der Recheneinheit laufend die Absolutbeträge mit einer festgelegten Toleranz und die erste magnetische Flussdichte, die zweite magnetische Flussdichte sowie die dritte magnetische Flussdichte mit einem definierten Schwellwert verglichen.
Wenn die Absolutbeträge über einen definierten Beobachtungszeitraum die festgelegte Toleranz nicht überschreiten und die erste magnetische Flussdichte, die zweite magnetische Flussdichte sowie die dritte magnetische Flussdichte den festgelegten Schwellwert überschreiten, so wird eine Anwesenheit des ersten Nutzermediums 2, des zweiten Nutzermediums 3 und des dritten Nutzermediums 4 in der Fahrgastzelle 1 festgestellt. Bei Feststellung einer Anwesenheit des ersten Nutzermediums 2, des zweiten Nutzermediums 3 und des dritten Nutzermediums 4 in der Fahrgastzelle 1 werden Signale mit entsprechend codierten Informationen an das erste Nutzermedium 2, das zweite Nutzermedium 3 und das dritte Nutzermedium 4 übertragen, welche Abbuchungen von Fahrpreisen von einem auf dem ersten Nutzermedium 2, dem zweiten Nutzermedium 3 und dem dritten Nutzermedium 4 gespeicherten Guthaben bewirken.

Für das erste Nutzermedium 2 und das zweite Nutzermedium 3 wird deren Anwesenheit in der Fahrgastzelle 1 festgestellt. Für das dritte Nutzermedium 4, welches sich außerhalb der Fahrgastzelle 1 bewegt, d.h. nicht in der Fahrgastzelle 1 anwesend ist, wird von der Recheneinheit des Erfassungsmoduls 7 keine Anwesenheit festgestellt, da die vierte Beschleunigung a4 stark von der ersten Beschleunigung a1, der zweiten Beschleunigung a2 und der dritten Beschleunigung a3 abweicht und auch die dritte magnetische Flussdichte den entsprechend festgelegten Schwellwert nicht überschreitet.
Es ist jedoch möglich, dass die vierte Beschleunigung a4 zumindest zeitweilig nicht von der ersten Beschleunigung a1, der zweiten Beschleunigung a2 und der dritten Beschleunigung a3 abweicht. Dennoch wird keine Anwesenheit des dritten Nutzermediums 4 in der Fahrgastzelle 1 festgestellt, sofern die dritte magnetische Flussdichte den festgelegten Schwellwert nicht überschreitet.
Weiterhin wird keine Anwesenheit des dritten Nutzermediums 4 in der Fahrgastzelle 1 festgestellt, wenn zwar die die dritte magnetische Flussdichte den festgelegten Schwellwert überschreitet, jedoch die vierte Beschleunigung a4 in Überschreitung der festgelegten Toleranz von der ersten Beschleunigung a1, der zweiten Beschleunigung a2 und der dritten Beschleunigung a3 abweicht.

Erfindungsgemäß ist es auch möglich, dass, wie in Bezug auf die erste Beschleunigung a1, die zweite Beschleunigung a2, die dritte Beschleunigung a3 sowie die vierte Beschleunigung a4, auf Grundlage der ersten magnetischen Flussdichte, der zweiten magnetischen Flussdichte sowie der dritten magnetischen Flussdichte Differenzen und Absolutbeträge gebildet werden und diese Absolutbeträge mittels einer Überprüfung auf Unter- bzw. Überschreitung einer festgelegten Toleranz für eine Feststellung einer Anwesenheit des ersten Nutzermediums 2, des zweiten Nutzermediums 3 und des dritten Nutzermediums 4 in der Fahrgastzelle 1 eingesetzt werden. Dabei ist es auch denkbar, dass das Erfassungsmodul 7 einen fünften Sensor, der als bekannter Hall-Magnetfeldsensor ausgeführt ist, aufweist und eine von diesem gemessene vierte magnetische Flussdichte in die Feststellung der Anwesenheit des ersten Nutzermediums 2, des zweiten Nutzermediums 3 und des dritten Nutzermediums 4 in der Fahrgastzelle 1 eingesetzt wird.

Darüber hinaus ist es vorstellbar, dass das Erfassungsmodul 7 zwar die zweite Sende- und Empfangseinheit 6 und die Recheneinheit, jedoch keine weiteren Sensoren aufweist. In einer solchen Ausführungsvariante der erfindungsgemäßen Vorrichtung ist ein Referenz-Nutzermedium mit entsprechenden Sensoren und in gleicher Ausführung wie das erste Nutzermedium 2, das zweite Nutzermedium 3 und das dritte Nutzermedium 4 in der Fahrgastzelle 1 vorgesehen, das beispielsweise ein Busfahrer mit sich führt. Zur Feststellung einer Anwesenheit des ersten Nutzermediums 2, des zweiten Nutzermediums 3 und des dritten Nutzermediums 4 in der Fahrgastzelle 1 erfolgt eine Signalübertragung zwischen dem Erfassungsmodul 7 einerseits und Referenz-Nutzermedium, dem ersten Nutzermedium 2, dem zweiten Nutzermedium 3 und dem dritten Nutzermedium 4 andererseits sowie eine Auswertung von an das Erfassungsmodul 7 übertragenen Informationen in der Recheneinheit.
Aufgrund des in der Fahrgastzelle 1 vorgesehenen Referenz-Nutzermediums ist eine Anwesenheits-Feststellung auch dann möglich, wenn neben dem Referenz-Nutzermedium nur das erste Nutzermedium 2 in der Fahrgastzelle 1 anwesend ist.

Bei einem Ausfall des ersten Sensors 8 erfolgt eine Anwesenheits-Feststellung bezüglich des ersten Nutzermediums 2 zumindest zeitweilig ausschließlich auf Grundlage des zweiten Sensors 9 bzw. bei einem Ausfall des zweiten Sensors 9 zumindest zeitweilig ausschließlich auf Grundlage des ersten Sensors 8, d.h. der erste Sensor 8 und der zweite Sensor 9 sind redundant zueinander ausgeführt.
Hierbei sind zur Kompensation des Ausfalls jedoch die Beobachtungszeiträume für eine Auswertung der ersten magnetischen Flussdichte bzw. der ersten Beschleunigung a1 zu verlängern.

Darüber hinaus ist es vorstellbar, den zweiten Sensor 9, den fünften Sensor, den sechsten Sensor und den achten Sensor als Schalldrucksensoren auszuführen. Gemessene Schalldrücke werden hierbei mit Referenz-Schalldrücken, welche Schallemissionen von Haltestellenansagen innerhalb der Fahrgastzelle 1 zugeordnet sind, verglichen.
Es werden aus den Schalldrücken und den Referenz-Schalldrücken Differenzen sowie aus den Differenzen Absolutbeträge gebildet und es erfolgt eine Prüfung, ob diese Absolutbeträge eine festgelegte Toleranz über- bzw. unterschreiten.
Ergebnisse dieser Prüfung werden in die Feststellung der Anwesenheit des ersten Nutzermediums 2, des zweiten Nutzermediums 3 und des dritten Nutzermediums 4 in der Fahrgastzelle 1 eingesetzt.

Ferner ist es denkbar, dass das erste Nutzermedium 2, das zweite Nutzermedium 3 und bzw. oder das dritte Nutzermedium 4 als aus dem Stand der Technik bekannte Mobiltelefone ausgebildet sind. Für eine solche Ausführungsvariante sind auf den Mobiltelefonen entsprechende Sende- und Empfangseinheiten, Sensoren und Applikationen vorzusehen, wobei die Applikationen Informationen zur Identifikation des ersten Nutzermediums 2, des zweiten Nutzermediums 3 und bzw. oder des dritten Nutzermediums 4 sowie ein Fahrpreisguthaben, auf das zugegriffen werden kann, bereitstellen. Über die Sende- und Empfangseinheiten werden diese Informationen zusammen mit Sensorinformationen als Signale an das Erfassungsmodul 7 übertragen.
Von dem Erfassungsmodul 7 werden Signale an die Mobiltelefone übertragen, welche Abbuchungen von Fahrpreisbeträgen von den mittels der Applikationen auf den Mobiltelefonen gespeicherten Fahrpreisguthaben bewirken.

### Liste der Bezeichnungen

- 1: Fahrgastzelle
- 2: Erstes Nutzermedium
- 3: Zweites Nutzermedium
- 4: Drittes Nutzermedium
- 5: Erste Sende- und Empfangseinheit
- 6: Zweite Sende- und Empfangseinheit
- 7: Erfassungsmodul
- 8: Erster Sensor
- 9: Zweiter Sensor
- 10: Dritter Sensor
- 11: Empfänger
- 12: Mikrocontroller
- 13: Sender
- 14: Fahrrad
- 15: Fahrbahn

- a1: Erste Beschleunigung
- a2: Zweite Beschleunigung
- a3: Dritte Beschleunigung
- a4: Vierte Beschleunigung

## Patentansprüche

1. Vorrichtung zur automatischen Anwesenheitskontrolle in einer Fahrgastzelle mit zumindest einem ersten Nutzermedium, das eine erste Sende- und Empfangseinheit aufweist, und zumindest einem Erfassungsmodul mit einer zweiten Sende- und Empfangseinheit, **dadurch gekennzeichnet, dass** auf dem zumindest ersten Nutzermedium (2) zumindest ein erster Sensor (8) und ein zweiter Sensor (9) angeordnet sind, welche unterschiedliche Wirkprinzipien aufweisen und redundant zueinander ausgeführt sind.

2. Vorrichtung nach Anspruch 1, **dadurch gekennzeichnet, dass** der zumindest erste Sensor (8) als Beschleunigungssensor ausgebildet ist.

3. Vorrichtung nach Anspruch 1 oder 2, **dadurch gekennzeichnet, dass** der zweite Sensor (9) als Magnetfeldsensor ausgebildet ist.

4. Vorrichtung nach Anspruch 1 oder 2, **dadurch gekennzeichnet, dass** der zweite Sensor (9) als Schalldrucksensor ausgebildet ist.

5. Vorrichtung nach einem der Ansprüche 1, 2, 3 oder 4, **dadurch gekennzeichnet, dass** die erste Sende- und Empfangseinheit (5) und die zweite Sende- und Empfangseinheit (6) für Sende- und Empfangsvorgänge von Hochfrequenzsignalen ausgeführt sind.

6. Vorrichtung nach einem der Ansprüche 1, 2, 3, 4 oder 5, **dadurch gekennzeichnet, dass** das zumindest erste Nutzermedium (2) als RFID-Chipkarte ausgebildet ist.

7. Vorrichtung nach einem der Ansprüche 1, 2, 3, 4 oder 5, **dadurch gekennzeichnet, dass** das zumindest erste Nutzermedium (2) als Mobiltelefon ausgebildet ist.

8. Vorrichtung nach einem der Ansprüche 1, 2, 3, 4, 5, 6 oder 7, **dadurch gekennzeichnet, dass** das zumindest eine Erfassungsmodul (7) zumindest einen dritten Sensor (10), der gleiches Wirkprinzip wie der erste Sensor (8) aufweist, umfasst.

9. Vorrichtung nach einem der Ansprüche 1, 2, 3, 4, 5, 6 oder 7, **dadurch gekennzeichnet, dass** das zumindest eine Erfassungsmodul (7) zumindest einen dritten Sensor (10), der gleiches Wirkprinzip wie der zweite Sensor (9) aufweist, umfasst.

10. Verfahren zur Anwendung der Vorrichtung nach einem der Ansprüche 1, 2, 3, 4, 5, 6, 7, 8 oder 9, **dadurch gekennzeichnet, dass** aus Messwerten zumindest des ersten Sensors (8) und eines vierten Sensors eines zweiten Nutzermediums (3) Differenzen gebildet werden,
dass Absolutbeträge der Differenzen gebildet werden, und dass eine Anwesenheit zumindest des ersten Nutzermediums (2) und des zweiten Nutzermediums (3) in der Fahrgastzelle (1) dann festgestellt wird, wenn die Absolutbeträge eine festgelegte Toleranz nicht überschreiten und wenn Messwerte zumindest des zweiten Sensors (9) einen festgelegten Schwellwert überschreiten.

11. Verfahren zur Anwendung der Vorrichtung nach einem der Ansprüche 1, 2, 3, 4, 5, 6, 7, 8 oder 9, **dadurch gekennzeichnet, dass** aus Messwerten zumindest des ersten Sensors (8) und des dritten Sensors (10) Differenzen gebildet werden,
dass Absolutbeträge der Differenzen gebildet werden, und dass eine Anwesenheit zumindest des ersten Nutzermediums (2) in der Fahrgastzelle (1) dann festgestellt wird, wenn die Absolutbeträge eine festgelegte Toleranz nicht überschreiten und wenn Messwerte zumindest des zweiten Sensors (9) einen festgelegten Schwellwert überschreiten.

12. Verfahren zur Anwendung der Vorrichtung nach einem der Ansprüche 1, 2, 3, 4, 5, 6, 7, 8 oder 9, **dadurch gekennzeichnet, dass** aus Messwerten zumindest des zweiten Sensors (9) und eines fünften Sensors des zumindest einen Erfassungsmoduls (7) Differenzen gebildet werden,
dass Absolutbeträge der Differenzen gebildet werden, und dass eine Anwesenheit zumindest des ersten Nutzermediums (2) in der Fahrgastzelle (1) dann festgestellt wird, wenn die Absolutbeträge eine festgelegte Toleranz nicht überschreiten.

13. Verfahren zur Anwendung der Vorrichtung nach einem der Ansprüche 1, 2, 3, 4, 5, 6, 7, 8 oder 9, **dadurch gekennzeichnet, dass** aus Messwerten zumindest des zweiten Sensors (9) und eines sechsten Sensors eines zweiten Nutzermediums (3) Differenzen gebildet werden,
dass Absolutbeträge der Differenzen gebildet werden, und dass eine Anwesenheit zumindest des ersten Nutzermediums (2) und des zweiten Nutzermediums (3) in der Fahrgastzelle (1) dann festgestellt wird, wenn die Absolutbeträge eine festgelegte Toleranz nicht überschreiten.

14. Verfahren nach einem der Ansprüche 10 bis 13, **dadurch gekennzeichnet, dass** eine Anwesenheits-Feststellung bezüglich des zumindest ersten Nutzermediums (2) bei einem Ausfall des zumindest ersten Sensors (8) zumindest zeitweilig ausschließlich auf Grundlage des zweiten Sensors (9) und bei einem Ausfall des zweiten Sensors (9) zumindest zeitweilig ausschließlich auf Grundlage des zumindest ersten Sensors (8) erfolgt.
